# EUROPÄISCHE PATENTSCHRIFT

(11) **EP 1 093 751 B1**
(45) Veröffentlichungstag und Bekanntmachung des Hinweises auf die Patenterteilung: **23.06.2004**
(21) Anmeldenummer: 00120464.3
(22) Anmeldetag: 19.09.2000
(51) Int. Cl.: E05D 11/08, A47K 17/02, F16C 11/10, A47K 3/00

(54) **Vorrichtung zur Halterung einer schwenkbaren Einrichtung**
Device for the mounting of a swingable apparatus
Dispositif de montage d'un appareil pivotable

(30) Priorität: 21.10.1999 DE 19950804
(43) Veröffentlichungstag der Anmeldung: 25.04.2001
(73) Patentinhaber: HEWI HEINRICH WILKE GMBH, 34454 Bad Arolsen (DE)
(72) Erfinder: Krahmer, Siegfried, 34466 Wolfhagen-Ippinghausen (DE)
(74) Vertreter: Manitz, Finsterwald & Partner GbR

(56) Entgegenhaltungen:
- DE-A- 3 150 765
- DE-A- 3 238 889
- US-A- 3 362 671
- US-A- 3 850 533
- US-A- 5 388 308
- US-A- 5 590 440

## Beschreibung

Die Erfindung betrifft eine Vorrichtung zur Halterung einer schwenkbaren Einrichtung.

Derartige Vorrichtungen sind grundsätzlich bekannt und werden beispielsweise in Verbindung mit Klappstühlen oder Stützklappgriffen verwendet, die zwischen einer vertikalen Nichtbenutzungsstellung und einer horizontalen Benutzungsstellung verschwenkbar sind.

Aus der DE 32 38 889 C2 ist eine Befestigungsvorrichtung zur schwenkbaren Befestigung eines Haltegriffs an einer Wand bekannt, die ein Gelenk und eine Fallbremse aufweist, wobei als Fallbremse eine Spiralfeder dient, die beim Verschwenken des Haltegriffs in eine horizontale Benutzungsstellung gespannt wird.

Es ist das der Erfindung zugrundeliegende Problem (Aufgabe), eine Vorrichtung der eingangs genannten Art zu schaffen, die bei möglichst einfachem Aufbau eine sichere Abbremsung der Schwenkbewegung gestattet und bei der insbesondere die Bremswirkung auf möglichst einfache Weise einstellbar und über lange Benutzungszeiträume konstant ist.

Die Lösung dieser Aufgabe erfolgt ausgehend von einer Vorrichtung der eingangs genannten Art dadurch, daß ein Gelenk vorgesehen ist, das mit der schwenkbaren Einrichtung verbindbar ist und zumindest einen zwischen zwei Armen drehbar gelagerten Lagerkörper umfaßt, der mit den Armen derart gekoppelt ist, daß durch Drehen des Lagerkörpers in Abhängigkeit von der Drehrichtung der Abstand zwischen den Armen zumindest im Bereich des Lagerkörpers verringert oder vergrößert wird.

Erfindungsgemäß kann eine Drehbewegung des Lagerkörpers, die durch Verschwenken der mit dem Gelenk verbundenen Einrichtung bewirkt wird, in eine Bewegung der Arme umgesetzt werden. In Abhängigkeit von der Schwenk- bzw. Drehrichtung wird der Abstand zwischen den Armen entweder verkleinert oder vergrößert. Durch die Erfindung wird daher ein selbstbremsendes Gelenk ermöglicht, da beim Verschwenken der Einrichtung in der entsprechenden Richtung der Abstand zwischen den Armen verringert und - bei entsprechend gewählten Abmessungen des Gelenks - der Lagerkörper zwischen den Armen eingespannt und auf diese Weise gebremst wird.

Durch gleichzeitiges Bewegen beider Arme relativ zum Lagerkörper gemäß einer bevorzugten Ausführung der Erfindung kann an beiden Seiten des Lagerkörpers eine Bremskraft aufgebracht werden.

Bevorzugt ist es, wenn gemäß einer weiteren Ausführungsform der Erfindung durch Verschwenken der Einrichtung aus einer Nichtbenutzungsstellung in eine Benutzungsstellung der Abstand zwischen den Armen verringert und der Lagerkörper zwischen den Armen eingeklemmt wird. Besonders vorteilhaft ist diese Ausführung in Verbindung mit Stützklappgriffen z.B. für Behinderten-WCs, die an einer Wand befestigt sind und sich in einer Nichtbenutzungsstellung in vertikaler Richtung entlang der Wand erstrecken. Durch das erfindungsgemäße Gelenk kann bei entsprechender Einstellung der Bremskraft verhindert werden, daß der Stützklappgriff versehentlich von selbst in eine horizontale Benutzungsstellung fällt. Da beim Zurückschwenken des Stützklappgriffs in die vertikale Benutzungsstellung der Abstand zwischen den Armen vergrößert wird, nimmt die von den Armen auf den Lagerkörper ausgeübte Klemm- oder Bremskraft ab, so daß der Stützklappgriff auch von Personen mit geringen Körperkräften problemlos hochgeklappt werden kann.

Gemäß einer besonders bevorzugten Ausführungsform der Erfindung ist der Lagerkörper mit den Armen verschraubt, wobei auf der einen Seite des Lagerkörpers ein linksgängiges Gewinde und auf der anderen Seite ein rechtsgängiges Gewinde vorgesehen ist.

Durch den entgegengesetzten Drehsinn auf verschiedenen Seiten des Lagerkörpers wird erreicht, daß bei einer Schwenkbewegung der Einrichtung beide Arme in Richtung des Lagerkörpers gezogen oder vom Lagerkörper weg bewegt werden. Ein wesentlicher Vorteil dieser Variante liegt in der vergleichsweise einfachen Konstruktion, die zudem eine einfache Einstellung der Bremskraft über die Schraubverbindungen ermöglicht. Durch entsprechende Ausgestaltung der Gewinde kann des weiteren erreicht werden, daß der Lagerkörper beim Verdrehen nicht entlang der Drehachse verschoben wird.

Bevorzugt ist es, wenn zur Herstellung der Schraubverbindungen separate Schraubelemente vorgesehen sind, die verdrehsicher an den Armen fixiert sind.

Durch die verdrehsichere Fixierung der Schraubelemente an den Armen wird ein Mitdrehen der Schraubelemente beim Verschwenken der Einrichtung verhindert, so daß das nach dem Fixieren der Schraubelemente eingestellte Bremsverhalten erhalten bleibt.

Gemäß einem weiteren bevorzugten Ausführungsbeispiel der Erfindung ist zwischen den Armen und dem Lagerkörper jeweils ein bevorzugt scheibenförmiges Bremsorgan angeordnet.

Unabhängig von dem Material des Lagerkörpers kann das Material der separaten Bremsorgane gezielt in Abhängigkeit von dem Material der Arme derart gewählt werden, daß die Abnutzung durch Reibung minimal ist. Dies ist insbesondere dann von Vorteil, wenn es aus Stabilitäts- und Festigkeitsgründen gewünscht ist, den Lagerkörper aus einem Material hoher Festigkeit wie z.B. Stahl herzustellen. Hinsichtlich der Abriebfestigkeit ungünstige Materialkombinationen können auf diese Weise vermieden werden, ohne Zugeständnisse bei der Stabilität der Vorrichtung machen zu müssen.

Bevorzugt ist es, wenn die Bremsorgane aus einem duktilen oder elastisch verformbaren Material hergestellt sind. Es ist auch möglich, die Bremsorgane federnd derart am Lagerkörper anzubringen, daß die Bremsorgane von den Armen gegen eine Rückstellkraft beaufschlagt werden, wenn der Lagerkörper in die entsprechende Richtung gedreht wird.

Weitere bevorzugte Ausführungsformen der Erfindung sind in den Unteransprüchen, der Beschreibung sowie der Zeichnung angegeben.

Die Erfindung wird im folgenden beispielhaft unter Bezugnahme auf die Zeichnung beschrieben. Es zeigen:
- Fig. 1: eine teilgeschnittene Draufsicht auf eine Halterungsvorrichtung gemäß einer Ausführungsform der Erfindung,
- Fig. 2: teilweise eine Seitenansicht der Vorrichtung von Fig. 1, und
- Fig. 3: eine vollständige Seitenansicht der Vorrichtung von Fig. 1.

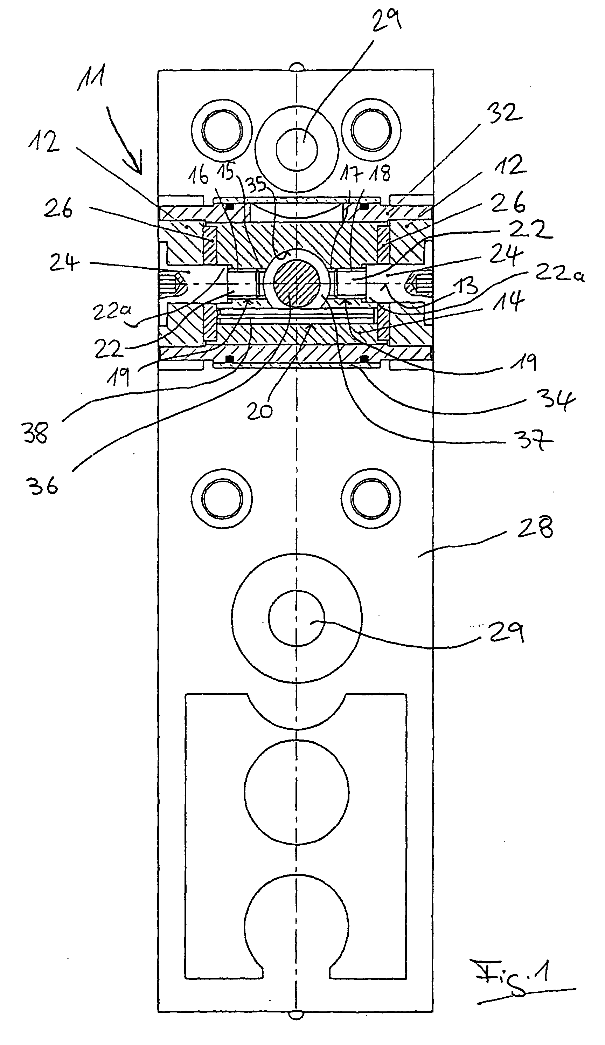

Die Halterungsvorrichtung gemäß Fig. 1 umfaßt einen plattenförmigen Grundkörper 28, von dem zwei parallel verlaufende Arme 12 senkrecht abstehen. Die Grundplatte 28 und die Arme 12 sind einstückig miteinander verbunden und weisen jeweils einen Stahlkern auf, der mit einem Kunststoff, vorzugsweise Nylon, ummantelt ist. Zur Befestigung an einer Wand ist die Grundplatte 28 mit Bohrungen 29 versehen.

Auf die Arme 12 ist eine zylindrische Hülse 32 aus Stahl derart aufgeschoben, daß die Hülse 32 gegenüber den Armen 12 nicht verdreht werden kann. Die Hülse 32 ist teilweise von einer Kunststoff-Abdeckung 34 umgeben.

In der Hülse 32 und zwischen den Armen 12 ist ein zylindrischer Lagerkörper 14 aus Stahl angeordnet, der gegenüber der Hülse 32 und den Armen 12 um eine Achse 13 verdrehbar ist. An den Stirnseiten trägt der Lagerkörper 14 scheibenförmige Bremsorgane 26, die drehfest am Lagerkörper 14 fixiert und z.B. mit dem Lagerkörper 14 verklebt sind.

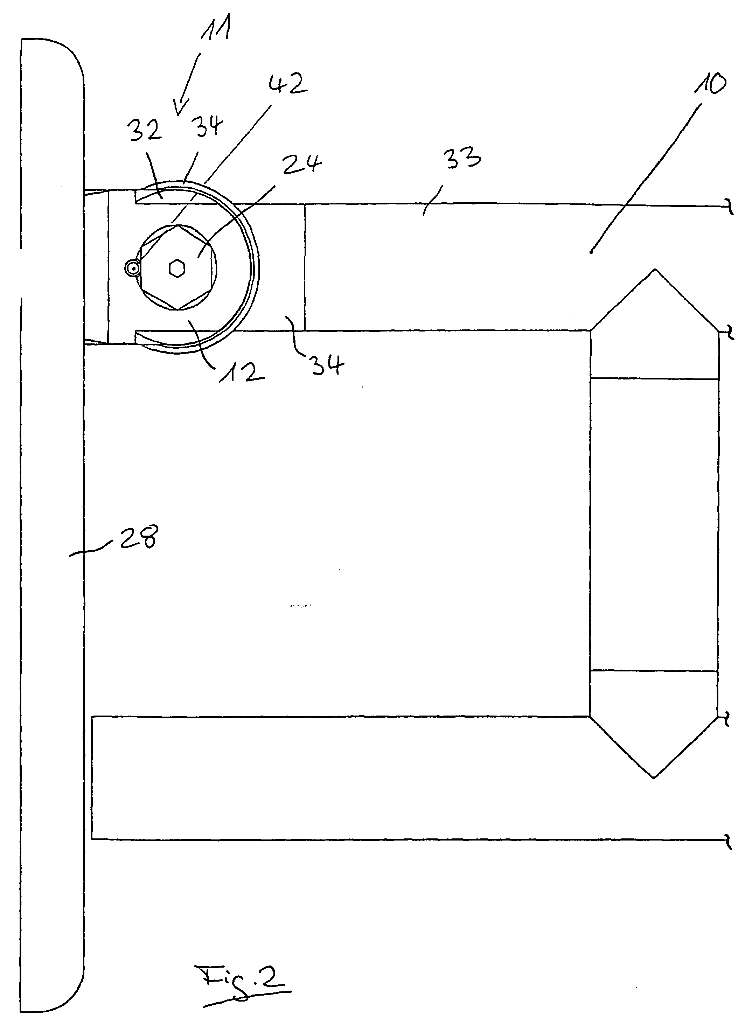

Von außen sind durch die Arme 12 Schrauben 24 hindurchgeführt, die mit nach innen vorstehenden Lagerabschnitten 22 mit dem Lagerkörper 14 stirnseitig verschraubt sind. Hierzu ist der Lagerkörper 14 mit einer zentralen Bohrung 19 versehen, deren Mittelachse mit der Drehachse 13 zusammenfällt. Die Schrauben 24 sind verdrehsicher an den Armen 12 fixiert. Die Art und Weise der Verdrehsicherung wird nachfolgend in Verbindung mit Fig. 2 erläutert.

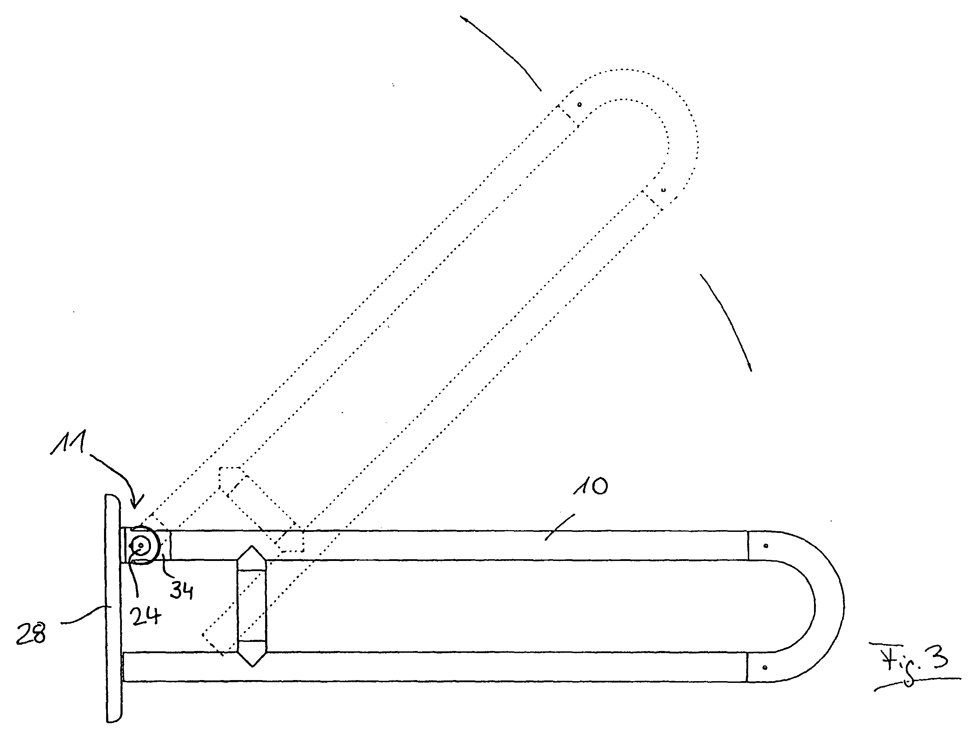

Mit dem Lagerkörper 14 lösbar verbunden ist ein sich senkrecht zur Drehachse 13 erstreckender Zapfen 36, der in eine im Lagerkörper 14 ausgebildete Bohrung 35 eingesteckt ist. Über den Zapfen 36, der mit einem Stützklappgriff 10 lösbar verbunden ist (Fig. 2 und 3), wird der Lagerkörper 14 beim Verschwenken des Stützklappgriffs gegenüber den Armen 12 und den Schrauben 24 verdreht.

In einem innerhalb des Lagerkörpers 14 gelegenen Bereich weist der Zapfen 36 eine nutförmige Umfangsausnehmung 37 auf. In die Ausnehmung 37 greift ein Stift 38 ein, der in eine parallel zur Drehachse 13 verlaufende Bohrung 20 des Lagerkörpers 14 eingesteckt ist. Der Stift 38 dient somit als eine Herausziehsicherung für den Zapfen 36, welche die Verdrehbarkeit des Zapfens 36 um die eigene Längsachse relativ zum Lagerkörper 14 nicht beeinträchtigt.

An einem Bereich reduzierten Durchmessers weisen die Lagerabschnitte 22 der Schrauben 24 jeweils ein Außengewinde 16, 18 auf, das mit einem entsprechenden Innengewinde 15, 17 des Lagerkörpers 14 zusammenwirkt.

An den Gewindebereich der Schrauben 24 grenzt jeweils ein Bereich 22a vergrößerten Durchmessers an, dessen Außendurchmesser dem Innendurchmesser der im Lagerkörper 14 ausgebildeten Bohrung 19 in diesem Bereich entspricht. Hierdurch wird eine stabile Verbindung zwischen den Schrauben 24 und dem Lagerkörper 14 erreicht, welche die Belastung der Gewinde 15, 16, 17, 18 verringert.

Die Gewinde 15, 16 auf der einen Seite des Lagerkörpers 14 sind linksgängig ausgeführt, wobei auf der anderen Seite des Lagerkörpers 14 Rechtsgewinde 17, 18 vorgesehen sind.

Durch diesen entgegengesetzten Drehsinn auf verschiedenen Seiten des Lagerkörpers 14 wird erreicht, daß beim Verschwenken des Stützklappgriffs in die Stellung gemäß Fig. 1, in welcher der Zapfen 36 parallel zu den Armen 12 und somit senkrecht zur Grundplatte 28 verläuft, beide Arme 12 gegen die Bremsscheiben 26 gezogen werden, wodurch die Verschwenkbewegung zunehmend gebremst wird. Die Gewinde 15, 16 und 17, 18 auf beiden Seiten des Lagerkörpers 14 weisen die gleiche Steigung auf, so daß sich der Lagerkörper 14 beim Verdrehen nicht längs der Drehachse 13 bewegt. Das Bremsverhalten und insbesondere die am Ende der Verschwenkbewegung wirksame Bremskraft kann durch entsprechendes Festziehen der Schrauben 24 gezielt eingestellt werden.

Da die einstückig mit dem Grundkörper 28 verbundenen Arme 12 bei der eine zunehmende Bremskraft bewirkenden Verschwenkbewegung verbogen werden, erfolgt diese Verschwenkbewegung gegen eine Rückstellkraft der Arme 12. Bei der umgekehrten Schwenkbewegung streben daher die Arme 12 von selbst auseinander.

Erfindungsgemäß können die Gewinde 15, 16, 17, 18 grundsätzlich beliebig ausgeführt sein. So können beispielsweise ein- oder mehrgängige Gewinde vorgesehen sein. Des weiteren ist es beispielsweise möglich, Trapezgewinde zu verwenden.

Allgemein können der Lagerkörper 14 und die Arme 12 über Steuerflächen oder Steuerkurven zusammenwirken, die einen den jeweiligen Anforderungen entsprechenden Verlauf aufweisen und bewirken, daß die Drehbewegung des Lagerkörpers 14 in eine Bewegung der Arme 12 parallel zur Drehachse 13 umgesetzt wird.

Dabei kann die Steigung der Gewinde oder Steuerkurven entsprechend den jeweiligen Anforderungen derart gewählt werden, daß bei der zu bremsenden Verschwenkbewegung eine ausreichend große Bremskraft erreicht wird.

Der Lagerkörper 14 und die Arme 12 müssen nicht über Gewinde oder gewindeartige Steuerflächen oder -kurven gekoppelt sein. Erfindungsgemäß ist es auch möglich, an den Armen 12 und am Lagerkörper 14 schräg zur Drehachse 13 des Lagerkörpers 14 verlaufende Schrägflächen vorzusehen, die beim Verdrehen des Lagerkörpers 14 derart zusammenwirken, daß die Arme 12 vom Lagerkörper 14 über die einander berührenden Schrägflächen auseinandergedrückt werden.

In der Seitenansicht von Fig. 2 ist der Endbereich eines Stützklappgriffs 10 dargestellt, der mit dem Gelenk 11 gekoppelt ist. Der zur Koppelung dienende und aus dem Lagerkörper 14 herausragende Zapfen 36 (Fig. 1) ist von einer Kunststoff-Abdeckung 33 des Griffs 10 verdeckt.

In Fig. 2 ist die verdrehsicher auf den Arm 12 aufgeschobene Hülse 32 zu erkennen, die zumindest bereichsweise von der Abdeckung 34 abgedeckt ist. Die Abdeckung 34 ist hinsichtlich Farbe und Form auf die Abdeckung 33 des Griffs 10 abgestimmt, wodurch ein optisch ansprechendes äußeres Erscheinungsbild geschaffen wird.

Die mittels eines Sechskantwerkzeugs drehbare Schraube 24 weist einen Sechseckkopf auf und ist durch einen von außen in den Arm 12 geschraubten Gewindestift 42 gegen ein Verdrehen relativ zum Arm 12 gesichert.

In Fig. 3 ist der bügelförmige Stützklappgriff 10 mit durchgezogenen Linien in einer horizontalen Benutzungsstellung dargestellt, in der sich ein Benutzer am Griff 10 abstützen kann. Mit gestrichelten Linien ist eine Zwischenstellung des Griffs 10 beim Verschwenken zwischen der Benutzungsstellung und einer nicht dargestellten vertikalen Nichtbenutzungsstellung gezeigt.

Beim Verschwenken des Griffs 10 nach unten in die horizontale Stellung nimmt die Bremskraft kontinuierlich zu. Das Gelenk 11 kann durch entsprechendes Festziehen der Schrauben 24 derart eingestellt werden, daß der Griff 10 in keiner Stellung aufgrund seines Eigengewichts von selbst in die horizontale Stellung fällt, d.h. zu jedem Zeitpunkt vom Gelenk 11 gehalten wird.

Beim Verschwenken nach oben in die Nichtbenutzungsstellung nimmt die Bremskraft kontinuierlich ab, so daß die maximale Kraft, die beim Hochklappen des Griffs 10 aufzubringen ist, durch die in der horizontalen Benutzungsstellung wirksame Bremskraft bestimmt ist.

Über die Grundplatte 28 ist die erfindungsgemäße Halterung an einer Wand befestigbar. Die Verdrehbarkeit des Zapfens 36 (vgl. Fig. 1) im Lagerkörper 14 ermöglicht es, den Griff 10 in der vertikalen Nichtbenutzungsstellung flach an der Wand anliegend zu positionieren, so daß er nicht im Wege ist. Es kann ein Rastmittel z.B. in Form einer federbelasteten Kugel vorgesehen sein, mit dem der Griff 10 über den Zapfen 36 jeweils in den um 90° versetzten Stellungen am Gelenk 11 verrastet werden kann.

### Bezugszeichenliste

- 10: schwenkbare Einrichtung
- 11: Gelenk
- 12: Arm
- 13: Drehachse
- 14: Lagerkörper
- 15, 16: linksgängiges Gewinde
- 17, 18: rechtsgängiges Gewinde
- 19: Bohrung
- 20: Bohrung
- 22: Lagerabschnitt
- 22a: Bereich vergrößerten Durchmessers
- 24: Schraubelement
- 26: Bremsorgan
- 28: Grundkörper
- 29: Bohrung
- 32: Hülse
- 33: Abdeckung
- 34: Abdeckung
- 35: Bohrung
- 36: Zapfen
- 37: Umfangsausnehmung
- 38: Stift
- 42: Gewindestift

## Patentansprüche

1. Vorrichtung zur Halterung einer schwenkbaren Einrichtung (10), insbesondere eines Stützklappgriffs an einer Wand, mit einem Gelenk (11), das mit der Einrichtung (10) verbindbar ist und zumindest einen zwischen zwei Armen (12) drehbar gelagerten Lagerkörper (14) umfaßt, **dadurch gekennzeichnet, dass** der Lagerkörper mit den Armen (12) derart gekoppelt ist, daß durch Drehen des Lagerkörpers (14) in Abhängigkeit von der Drehrichtung der Abstand zwischen den Armen (12) zumindest im Bereich des Lagerkörpers (14) verringert oder vergrößert wird.

2. Vorrichtung nach Anspruch 1,
**dadurch gekennzeichnet,**
**daß** durch Drehen des Lagerkörpers (14) gleichzeitig beide Arme (12) relativ zum Lagerkörper (14) und bevorzugt zumindest näherungsweise parallel zur Drehachse (13) des Lagerkörpers (14) bewegt werden.

3. Vorrichtung nach Anspruch 1 oder 2,
**dadurch gekennzeichnet,**
**daß** durch Verschwenken der Einrichtung (10) aus einer Nichtbenutzungsstellung in eine Benutzungsstellung der Abstand zwischen den Armen (12) verringert und der Lagerkörper (14) zwischen den Armen (12) eingeklemmt wird.

4. Vorrichtung nach zumindest einem der vorhergehenden Ansprüche,
**dadurch gekennzeichnet,**
**daß** eine von den Armen (12) auf den Lagerkörper (14) ausgeübte Klemmkraft beim Verschwenken der Einrichtung (10) in Abhängigkeit von der Schwenkrichtung mit zunehmendem Drehwinkel des Lagerkörpers (14) kontinuierlich zunimmt oder abnimmt.

5. Vorrichtung nach zumindest einem der vorhergehenden Ansprüche,
**dadurch gekennzeichnet,**
**daß** die Arme (12) etwa parallel zueinander verlaufen und sich etwa senkrecht zur Drehachse des Lagerkörpers (14) erstrecken.

6. Vorrichtung nach zumindest einem der vorhergehenden Ansprüche,
**dadurch gekennzeichnet,**
**daß** der Lagerkörper (14) mit den Armen (12) über bevorzugt gewindeartige Steuerflächen (15, 16, 17, 18) gekoppelt ist, wobei auf verschiedenen Seiten des Lagerkörpers (14) vorgesehene Steuerflächen (15, 16, 17, 18) einen entgegengesetzten Drehsinn aufweisen.

7. Vorrichtung nach zumindest einem der vorhergehenden Ansprüche,
**dadurch gekennzeichnet,**
**daß** der Lagerkörper (14) mit den Armen (12) verschraubt ist, wobei auf der einen Seite des Lagerkörpers (14) ein linksgängiges Gewinde (15, 16) und auf der anderen Seite ein rechtsgängiges Gewinde (17, 18) vorgesehen ist.

8. Vorrichtung nach Anspruch 7,
**dadurch gekennzeichnet,**
**daß** Schraubelemente (24) von außen durch die Arme (12) hindurchgeführt und verdrehsicher an den Armen (12) fixiert sind.

9. Vorrichtung nach zumindest einem der vorhergehenden Ansprüche,
**dadurch gekennzeichnet,**
**daß** der Lagerkörper (14) mit nach innen vorstehenden Lagerabschnitten (22) der Schrauben (24) gekoppelt und insbesondere auf den Lagerabschnitten (22) drehbar gelagert ist.

10. Vorrichtung nach zumindest einem der vorhergehenden Ansprüche,
**dadurch gekennzeichnet,**
**daß** der Lagerkörper (14) in einer drehfest mit den Armen (12) verbundenen Hülse (32) drehbar gelagert ist.

11. Vorrichtung nach zumindest einem der vorhergehenden Ansprüche,
**dadurch gekennzeichnet,**
**daß** zwischen den Armen (12) und dem Lagerkörper (14) jeweils ein bevorzugt scheibenförmiges Bremsorgan (26) angeordnet ist.

12. Vorrichtung nach Anspruch 11,
**dadurch gekennzeichnet,**
**daß** die Bremsorgane (26) drehfest mit dem Lagerkörper (14) verbunden sind.

13. Vorrichtung nach zumindest einem der vorhergehenden Ansprüche,
**dadurch gekennzeichnet,**
**daß** an den Armen (12) und am Lagerkörper (14) ausgebildete und zusammenwirkende Reibflächen aus Materialien mit hoher gegenseitiger Abriebfestigkeit hergestellt sind.

14. Vorrichtung nach zumindest einem der vorhergehenden Ansprüche,
**dadurch gekennzeichnet,**
**daß** der Lagerkörper (14) aus Metall, insbesondere Stahl, und Bremsorgane (26) aus Kunststoff, insbesondere Elastolan, hergestellt sind.

15. Vorrichtung nach zumindest einem der vorhergehenden Ansprüche,
**dadurch gekennzeichnet,**
**daß** die Arme (12) aus einem Material hoher Festigkeit, insbesondere Stahl, hergestellt sind, das zumindest an mit dem Lagerkörper (14) zusammenwirkenden Bereichen mit Kunststoff, insbesondere Nylon, versehen ist.

16. Vorrichtung nach zumindest einem der vorhergehenden Ansprüche,
**dadurch gekennzeichnet,**
**daß** die schwenkbare Einrichtung (10) mit dem Lagerkörper (14), insbesondere lösbar, verbindbar ist.

17. Vorrichtung nach zumindest einem der vorhergehenden Ansprüche,
**dadurch gekennzeichnet,**
**daß** die schwenkbare Einrichtung (10) mit dem Lagerkörper (14) über einen gegenüber dem Lagerkörper (14) verdrehbaren Zapfen (36) verbindbar ist.

18. Vorrichtung nach zumindest einem der vorhergehenden Ansprüche,
**dadurch gekennzeichnet,**
**daß** die Arme (12) an ihrem einen Ende in einem konstanten Abstand voneinander gehaltert und durch Drehen des Lagerkörpers (14) insbesondere zum Verringern ihres Abstandes elastisch verformbar sind.

19. Vorrichtung nach zumindest einem der vorhergehenden Ansprüche,
**dadurch gekennzeichnet,**
**daß** die Arme (12) einstückig mit einem Grundkörper (28) verbunden sind.

20. Vorrichtung nach zumindest einem der vorhergehenden Ansprüche,
**dadurch gekennzeichnet,**
**daß** der Grundkörper (28) plattenförmig und insbesondere zur Befestigung an einer Wand ausgebildet ist.

## Claims

1. An apparatus for holding a pivotable device (10), in particular a pivotal hand support on a wall, having a joint (11) which can be connected to the device (10) and includes at least one bearing body (14) rotatably supported between two arms (12), **characterised in that** the bearing body is coupled to the arms (12) such that, by rotating the bearing body (14), the spacing between the arms (12) is reduced or enlarged in dependence on the direction of rotation at least in the region of the bearing body (14).

2. An apparatus in accordance with claim 1, **characterised in that** both arms (12) are moved simultaneously relatively to the bearing body (14) and preferably at least approximately parallel to the axis of rotation (13) of the bearing body (14) by rotating the bearing body (14).

3. An apparatus in accordance with claim 1 or claim 2, **characterised in that** the spacing between the arms (12) is reduced and the bearing body (14) is clamped between the arms (12) by pivoting the device (10) out of a position of non-use into a position of use.

4. An apparatus in accordance with at least one of the preceding claims, **characterised in that** a clamping force exerted by the arms (12) onto the bearing body (14) on the pivoting of the device (10) increases or decreases continuously in dependence on the direction of pivoting as the angle of rotation of the bearing body (14) increases.

5. An apparatus in accordance with at least one of the preceding claims, **characterised in that** the arms (12) extend parallel to one another and approximately perpendicular to the axis of rotation of the bearing body (14).

6. An apparatus in accordance with at least one of the preceding claims, **characterised in that** the bearing body (14) is coupled to the arms (12) via control surfaces (15, 16, 17, 18), preferably threadlike control surfaces, with control surfaces (15, 16, 17, 18) provided on different sides of the bearing body (14) having an opposite sense of rotation.

7. An apparatus in accordance with at least one of the preceding claims, **characterised in that** the bearing body (14) is screwed to the arms (12), with a left-hand thread (15, 16) being provided on the one side of the bearing body (14) and a right-hand thread (17, 18) being provided on the other side.

8. An apparatus in accordance with claim 7, **characterised in that** screw elements (24) are guided through the arms (12) from the outside and are fixed to the arms (12) in a manner secured against rotation.

9. An apparatus in accordance with at least one of the preceding claims, **characterised in that** the bearing body (14) is coupled to inwardly projecting bearing sections (22) of the screws (24) and is in particular rotatably supported on the bearing sections (22).

10. An apparatus in accordance with at least one of the preceding claims, **characterised in that** the bearing body (14) is rotatably supported in a sleeve (32) rotatably fixedly connected to the arms (12).

11. An apparatus in accordance with at least one of the preceding claims, **characterised in that** a preferably disk-shaped braking member (26) is respectively arranged between the arms (12) and the bearing body (14).

12. An apparatus in accordance with claim 11, **characterised in that** the braking members (26) are rotatably fixedly connected to the bearing body (14).

13. An apparatus in accordance with at least one of the preceding claims, **characterised in that** cooperating friction surfaces formed at the arms (12) and at the bearing body (14) are manufactured from materials with high mutual abrasion resistance.

14. An apparatus in accordance with at least one of the preceding claims, **characterised in that** the bearing body (14) is made of metal, in particular of steel, and the braking members (26) are made of plastic, in particular of Elastolan.

15. An apparatus in accordance with at least one of the preceding claims, **characterised in that** the arms (12) are made from a material of high strength, in particular of steel, which is provided with plastic, in particular nylon, at least at regions cooperating with the bearing body (14).

16. An apparatus in accordance with at least one of the preceding claims, **characterised in that** the pivotable device (10) can be connected, in particular releasably connected, to the bearing body (14).

17. An apparatus in accordance with at least one of the preceding claims, **characterised in that** the pivotable device (10) can be connected to the bearing body (14) via a spigot (36) rotatable with respect to the bearing body (14).

18. An apparatus in accordance with at least one of the preceding claims, **characterised in that** the arms (12) are held at a constant spacing from one another at their one end and are elastically deformable, in particular to reduce their spacing, by rotating the bearing body (14).

19. An apparatus in accordance with at least one of the preceding claims, **characterised in that** the arms (12) are connected in one piece to a base body (28).

20. An apparatus in accordance with at least one of the preceding claims, **characterised in that** the base body (28) is made in plate shape and in particular for fastening to a wall.

## Revendications

1. Dispositif de retenue d'un appareil (10) apte à pivoter, notamment d'une poignée d'appui rabattable située sur une paroi, comportant une articulation (11) pouvant être reliée audit appareil (10) et munie d'au moins un corps de montage (14) monté à rotation entre deux bras (12), **caractérisé en ce que** le corps de montage (14) est accouplé aux bras (12) de façon telle que, suite à une rotation dudit corps de montage (14), la distance entre lesdits bras (12) est diminuée ou augmentée en fonction du sens de rotation, au moins dans la région dudit corps de montage (14).

2. Dispositif selon la revendication 1,
**caractérisé en ce que**
une rotation du corps de montage (14) a simultanément pour effet d'imprimer des mouvements aux deux bras (12) vis-à-vis dudit corps de montage (14) et, de préférence, au moins à peu près parallèlement à l'axe de rotation (13) dudit corps de montage (14).

3. Dispositif selon la revendication 1 ou 2,
**caractérisé en ce que**
suite à un pivotement de l'appareil (10) depuis une position de non-utilisation jusqu'à une position d'utilisation, la distance séparant les bras (12) est diminuée et le corps de montage (14) est coincé entre lesdits bras (12).

4. Dispositif selon l'une au moins des revendications précédentes,
**caractérisé en ce que**
une force de coincement, appliquée au corps de montage (14) par les bras (12), croît ou décroît continûment lors du pivotement de l'appareil (10), en fonction du sens de pivotement, au fur et à mesure de l'augmentation de l'angle de rotation dudit corps de montage (14).

5. Dispositif selon l'une au moins des revendications précédentes,
**caractérisé en ce que**
les bras (12) s'étendent à peu près parallèlement l'un à l'autre et à peu près perpendiculairement à l'axe de rotation du corps de montage (14).

6. Dispositif selon l'une au moins des revendications précédentes,
**caractérisé en ce que**
le corps de montage (14) est accouplé aux bras (12) par l'intermédiaire de surfaces de commande (15, 16, 17, 18) préférentiellement de type fileté, les surfaces de commande (15, 16, 17, 18) prévues sur différents côtés dudit corps de montage (14) présentant un sens de rotation opposé.

7. Dispositif selon l'une au moins des revendications précédentes,
**caractérisé en ce que**
le corps de montage (14) est relié aux bras (12) par vissage, un filetage (15, 16) à pas à gauche étant prévu sur l'un des côtés dudit corps de montage (14), et un filetage (17, 18) à pas à droite étant prévu sur l'autre côté.

8. Dispositif selon la revendication 7,
**caractérisé en ce que**
des éléments vissables (24) sont engagés de l'extérieur à travers les bras (12) et sont bloqués sur lesdits bras (12) avec verrouillage rotatif.

9. Dispositif selon l'une au moins des revendications précédentes,
**caractérisé en ce que**
le corps de montage (14) est accouplé à des zones de portée (22) des vis (24), qui font saillie vers l'intérieur, et est notamment monté à rotation sur lesdites zones de portée (22).

10. Dispositif selon l'une au moins des revendications précédentes,
**caractérisé en ce que**
le corps de montage (14) est monté pivotable sur une douille (32) solidarisée en rotation avec les bras (12).

11. Dispositif selon l'une au moins des revendications précédentes,
**caractérisé en ce que**
un organe de freinage (26), de préférence discoïdal, est respectivement interposé entre les bras (12) et le corps de montage (14).

12. Dispositif selon la revendication 11,
**caractérisé en ce que**
les organes de freinage (26) sont solidarisés en rotation avec le corps de montage (14).

13. Dispositif selon l'une au moins des revendications précédentes,
**caractérisé en ce que**
les surfaces de frottement, formées sur les bras (12) et sur le corps de montage (14) et coopérant mutuellement, sont fabriquées en des matériaux à haute résistance à l'abrasion mutuelle.

14. Dispositif selon l'une au moins des revendications précédentes,
**caractérisé en ce que**
le corps de montage (14) est fabriqué en un métal, notamment en de l'acier, et les organes de freinage (26) sont fabriqués en une matière plastique, notamment de l'élastolane.

15. Dispositif selon l'une au moins des revendications précédentes,
**caractérisé en ce que**
les bras (12) sont fabriqués en un matériau à haute robustesse, en particulier de l'acier, qui est muni d'une matière plastique, notamment du Nylon, au moins dans les zones coopérant avec le corps de montage (14).

16. Dispositif selon l'une au moins des revendications précédentes,
**caractérisé en ce que**
l'appareil pivotant (10) peut être relié au corps de montage (14), notamment de manière libérable.

17. Dispositif selon l'une au moins des revendications précédentes,
**caractérisé en ce que**
l'appareil pivotant (10) peut être relié au corps de montage (14) par l'intermédiaire d'un tenon (36) pouvant tourner vis-à-vis dudit corps de montage (14).

18. Dispositif selon l'une au moins des revendications précédentes,
**caractérisé en ce que**
les bras (12) sont maintenus à distance constante les uns des autres, à l'une de leurs extrémités, et sont élastiquement déformables par rotation du corps de montage (14), notamment en vue de diminuer leur espacement.

19. Dispositif selon l'une au moins des revendications précédentes,
**caractérisé en ce que**
les bras (12) sont reliés d'un seul tenant à un corps de base (28).

20. Dispositif selon l'une au moins des revendications précédentes,
**caractérisé en ce que**
le corps de base (28) est réalisé en forme de plaque, notamment en vue de la fixation à une paroi.
